# EUROPEAN PATENT APPLICATION

(11) **EP 4 567 313 A1**
(43) Date of publication of application: **11.06.2025**
(21) Application number: 24212274.5
(22) Date of filing: 12.11.2024
(51) Int. Cl.: F16K 31/524, F16K 31/53, F16K 1/36

(54) **FLOW RATE REGULATING VALVE**

(30) Priority: 06.12.2023 JP 2023205857; 26.09.2024 JP 2024166934
(71) Applicant: Tatsuno Corporation, Tokyo 108-0073 (JP)
(72) Inventor: TAKEZAWA, Masahiro, Tokyo, 108-0073 (JP)
(74) Representative: Isarpatent

(57) **Abstract**

[OBJECT]

To provide a flow rate regulating valve that handles high-pressure gas as a working fluid, that can withstand and operate under the high load of high-pressure gas, and that is less susceptible to wear.

[SOLUTION]

A flow rate regulating valve 100 according to the present invention is characterized by including a cam plate 11, 111, a cam follower 12, 112 that is pressed against a surface 11A, 111A of the cam plate 11, 111 and moves in a direction of a rotation axis of the cam plate 11, 111 as the cam plate 11, 111 rotates, and a valve stem 1 that moves in a direction of the rotation axis of the cam plate 11, 111 in associated with movement of the cam follower 12, 112 and varies a flow rate depending on a relative position with respect to a flow path 3.

## Description

### BACKGROUND

### 1. Field of the Invention

The present invention relates to a flow rate regulating valve, and more particularly to a flow rate regulating valve, for example of a needle valve type, for handling high pressure gas.

### 2. Description of the Related Art

Flow rate regulating valves for high pressure gas that adjust a valve opening by reciprocating a valve body in an axial direction of a valve stem. In such conventional flow rate regulating valves, there are valves in which a valve body or a valve stem is operated by an actuator such as a stepping motor (for example, Patent Document 1), and there are valves in which an air valve is provided separately and operated by air. However, since in the case of flow rate regulating valves for high pressure gas, the pressure of the high pressure gas, which is a working fluid, acts on the valve body, it is necessary to drive it with a large force to reciprocate the valve body, which causes a problem that the actuator or the air valve itself becomes large. In addition, there is a problem that a device for controlling the large actuator or the air valve itself is required.

Here, by using a rotating device such as a motor as a power source and converting a rotational motion into a linear motion using a screw mechanism, it is possible to reciprocate the valve body in the axial direction of a valve stem to adjust the valve opening. If a motor is used as the power source, it is possible to directly control the valve opening by controlling the motor. However, when the rotational motion is converted into linear motion using a screw mechanism, the pressure of the high-pressure gas, which is a working fluid, acts on the threads of the screw mechanism, causing wear in the screw-threaded portion, which causes durability problems.

The content of JP2021-196001A gazette is incorporated herein by reference in its entirety.

### BRIEF SUMMARY

The present invention has been proposed in consideration of the problems of the prior art described above, and aims to provide a flow rate regulating valve that handles high-pressure gas as a working fluid, that can withstand and operate under the high load of high-pressure gas, and that is less susceptible to wear.

A flow rate regulating valve 100 according to the present invention is characterized by including a cam plate 11, a cam follower 12 that is pressed against a surface 11A of the cam plate 11 and moves in a direction of the rotation axis of the cam plate 11 as the cam plate 11 rotates, and a valve stem 1 that moves in a direction of the rotation axis of the cam plate 11 in associated with movement of the cam follower 12, and varies a flow rate depending on a relative position with respect to a flow path 3.

According to the present invention with the above-mentioned construction, the rotation of the cam plate 11 moves the cam follower 12 in the direction of the rotational axis of the cam plate 11, and the movement of the cam follower 12 moves the valve stem 1 in the direction of the rotational axis of the cam plate 11, and the flow rate is varied depending on the relative position with respect to the flow path 3, so that the flow rate characteristics required for flow rate regulating valve 100 can be realized.

Furthermore, in the present invention, converting rotational motion into linear motion using the cam plate 11 and cam follower 12 makes it possible to adjust the valve opening by reciprocating the valve element in the axial direction of the valve stem 1. According to the present invention, it is not the screw mechanism that converts rotational motion into linear motion, and the pressure of the high-pressure gas, which is a working fluid, does not act on the threads of the screw mechanism, therefore, there is no wear on the screw engagement portion, and the durability of the flow rate regulating valve 100 is improved.

The valve stem 1 may be connected to one end of a valve stem support 13, the other end of which is connected to the cam follower 12.

Also, the cam follower 12 may have a moving portion 12 A at one end, and the moving portion 12 A may be pressed against the surface 11 A of the cam plate 11.

Furthermore, the cam follower 12 can be configured as a cam follower rod 12 that is configured as a rod shape overall, has moving parts 12A near both ends that are rotatably pressed against the surface 11A of the cam plate 11, and one end of the cam follower rod 12 is connected a valve stem support 13 extending in the direction of the rotation axis at a central part of the cam plate 11.

The moving part 12A may be a rolling bearing or a plain bearing. Arranging a rolling bearing or a plain bearing to reduce resistance allows the cam plate 11 to be rotated without using a large power to adjust the position of the valve stem in the direction of the central axis C, thereby, no need to provide a large actuator or an air valve as in the conventional technology.

The cam follower 12 may be constructed by a rotatable disk-shaped member, and a rotation axis of the disk-shaped member is supported by one end of a valve stem support portion 13 extending in the direction of the rotation axis of the cam plate 11 from a position eccentric radially outward with respect to the center of the cam plate 11.

By making the thickness of a cam plate 111 small on the radially outward side and large on the radially inward side, forming an inclination on a surface 111A of the cam plate 111 on which a cam follower 112 rolls, forming a moving part 112A of the cam follower 112 into a truncated cone shape, and making the inclined surface of the cam plate 111 into a shape complementary to the moving part, there is no inner race difference when the cam follower roller 112A rotates in a circular trajectory along the cam plate surface 111A, and no slippage occurs. This makes it possible to prevent the cam follower roller 112A from wearing out.

In addition, a measuring device 22 may be provided that measures the number of revolutions of the output shaft of a driving source for driving the cam plate 11, 111 or the number of revolutions of a gear constituting a reduction mechanism 21 interposed between the driving source and the cam plate 111, 111, and a control device CU that controls the flow rate of the fluid flowing through the flow path 3 based on the measurement results of the measuring device 22. Providing the measuring device 22 and the control device CU allows the positions of the cam plate surface 11A, 111A and the cam follower 12, 112 to be identified, and controlling the number of revolutions of the output shaft of the driving source allows the position of the axial direction C of the valve stem 1 to accurately be controlled, so that the flow rate of the high-pressure gas can be accurately controlled according to required characteristics.

### BRIEF DESCRIPTION OF THE DRAWINGS

[Figure 1] A cross-sectional view of a flow rate regulating valve according to an embodiment of the present invention.
[Figure 2] A cross-sectional view of the flow rate regulating valve showing a section perpendicular to that shown in Fig. 1.
[Figure 3] A characteristic diagram showing a desirable valve opening-hydrogen flow rate characteristics of the flow rate regulating valve for hydrogen filling in fuel cell vehicles (FCVs).
[Figure 4] An enlarged cross-sectional view showing the relative position of a valve stem tip and a small-diameter portion of a flow path when the flow rate regulating valve is closed.
[Figure 5] An enlarged cross-sectional view showing the relative position of the valve stem tip and the small-diameter portion of the flow path in a low flow rate region of the flow rate regulating valve.
[Figure 6] An enlarged cross-sectional view showing the relative position of the valve stem tip and the small-diameter portion of the flow path at the boundary between the low flow rate region and the high flow rate region of the flow rate regulating valve.
[Figure 7] An enlarged cross-sectional view showing the relative position of the valve stem tip and the small-diameter portion of the flow path in the high flow rate region of the flow rate regulating valve.
[Figure 8] A perspective view of the flow rate regulating valve shown in Figs. 1 and 2.
[Figure 9] A perspective view of the flow rate regulating valve shown in Fig. 8 with the casing omitted.
[Figure 10] A perspective view showing a cam plate, cam follower rod, and valve stem support of the flow rate regulating valve.
[Figure 11] An A11 arrow view of the cam plate, cam follower rod, and valve stem support shown in Fig. 10.
[Figure 12] A perspective view showing the combination of the cam plate and a gear.
[Figure 13] A perspective view of the cam plate.
[Figure 14] A flowchart showing opening and closing control in the illustrated embodiment.
[Figure 15] A block diagram for executing the control shown in Fig. 14.
[Figure 16] A perspective view showing the main part of the flow rate regulating valve according to the first modification of the illustrated embodiment.
[Figure 17] A perspective view showing the main part of the flow rate regulating valve according to the second modification of the illustrated embodiment.
[Figure 18] A perspective view showing the main part of the flow rate regulating valve according to the third modification of the illustrated embodiment.
[Figure 19] A perspective view showing the combination of the cam plate, cam follower rod, cam follower roller, and valve stem support in the fourth modification of the illustrated embodiment.
[Figure 20] An exploded cross-sectional view showing the structure of the cam follower roller at an end of the cam follower rod shown in Fig. 19.
[Figure 21] An explanatory diagram showing the problem when the cam follower roller is cylindrical in shape.
[Figure 22] An explanatory diagram showing that the problem explained in Fig. 21 is solved when the cam follower roller is conical in shape.
[Figure 23] An explanatory diagram showing an external force acting when the cam follower roller is conical in shape.

### MODE FOR CARRYING OUT THE INVENTION

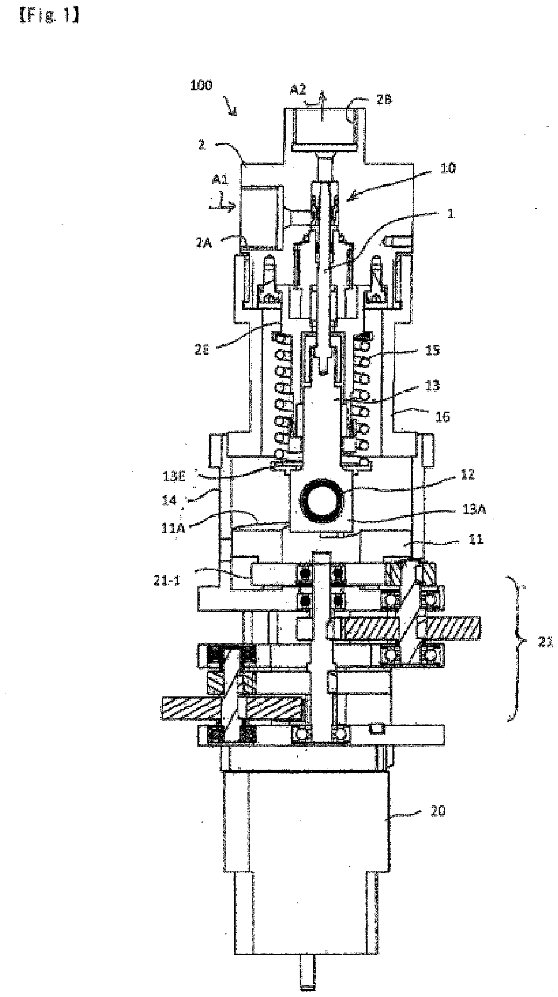

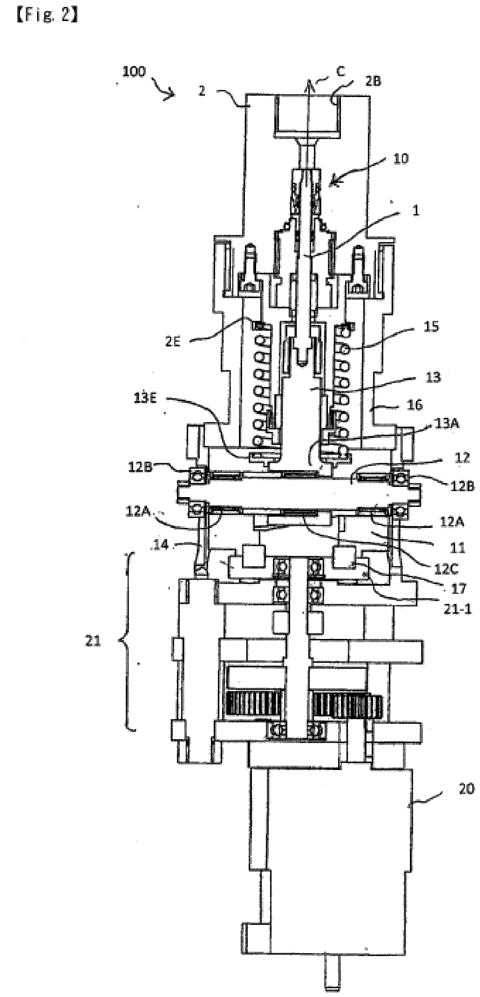

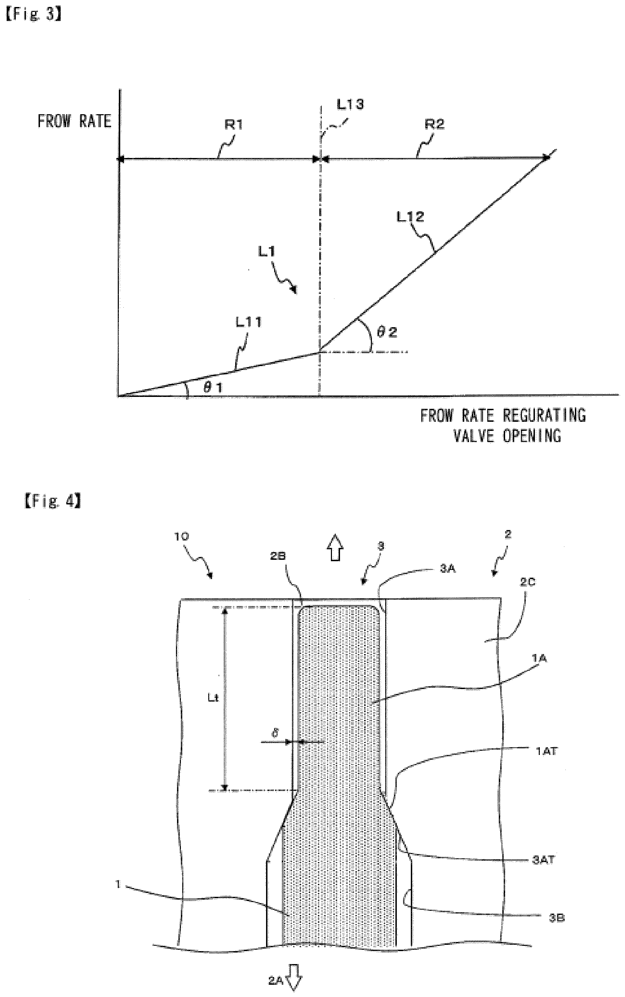

An embodiment of the present invention will now be explained with reference to the attached drawings. In the illustrated embodiment, a working fluid is, for example, high-pressure hydrogen gas. First, the embodiment of the present invention will be explained with reference to Figs. 1 to 17. In Fig. 1 showing a cross-section of a flow rate regulating valve 100 according to the embodiment, the high-pressure hydrogen gas, which is the working fluid of the flow rate regulating valve 100, flows in from an inlet 2A in an arrow A1 direction, passes through a flow path adjustment part 10, and is supplied downstream from an outlet 2B in an arrow A2 direction. In Figs. 1 and 2, the flow path adjustment part 10 has a valve body and a valve seat, and has a function to adjust flow rate by adjusting the valve opening. The details of the flow path adjustment part 10 will be described later with reference to Figs. 3 to 7. Note that in Fig. 1, only gears are hatched.

In Figs. 1 and 2, the flow rate regulating valve 100 has a main body (flow path adjustment part casing) 2, a valve stem support 13, a cam plate 11 with a slope formed on its surface 11A, a cam follower rod (cam follower) 12, and an electric motor (drive source) 20. A flow path 3 (Figs. 4-7) is formed in the main body 2, and the flow path 3 constitutes the flow path adjustment part 10. The valve stem support 13 supports the valve stem 1, and the valve stem 1 has a valve stem tip 1A (Figs. 4-7). The electric motor 20 rotates the cam plate 11 through a reduction mechanism 21. A spring 15 is interposed between a contact part 2E on the main body 2 side and a contact part 13E near the lower end of the valve stem support 13, and the valve stem support 13 is pressed downward in Figs. 1 and 2 by the spring 15, so that the flow rate regulating valve 100 is always biased in the opening direction. The flow rate regulating valve 100 has a cam plate side casing 14 and a valve stem support part casing 16, where the cam plate side casing 14 covers from near the lower end of the valve stem support 13 to below the cam follower rod 12 and the cam plate 11, and the valve stem support part casing 16 covers from near the lower end of the main body 2 to near the lower end of the valve stem support 13 and the spring 15.

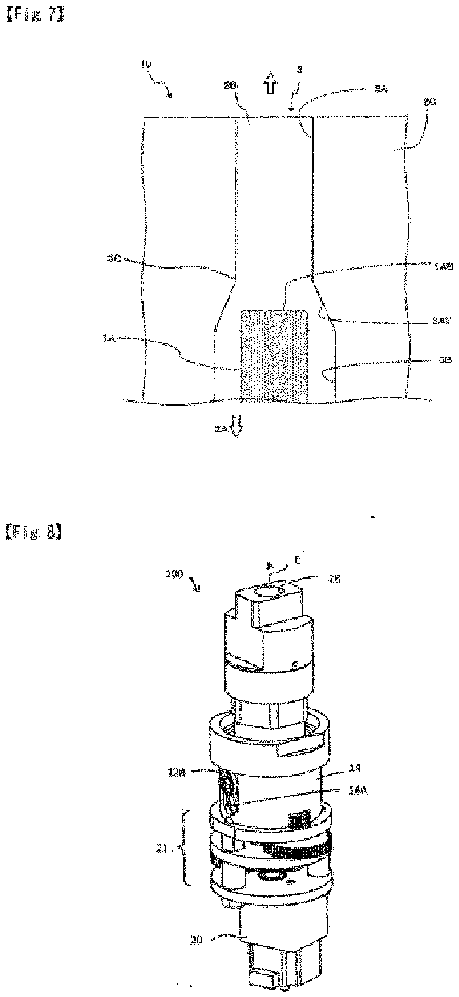

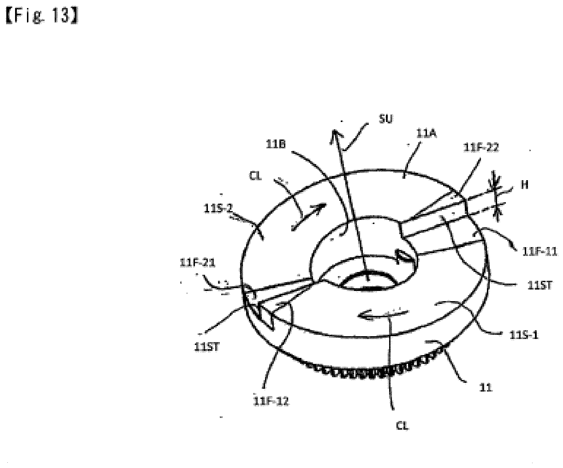

As will be described later with reference to Fig. 13, the cam plate 11 has a slope formed on its surface 11A (the upper surface in Figs. 1 and 2: for the cam plate 11, the reference number is only shown in Fig. 1), and its lower surface is constructed as a flat surface. Therefore, the thickness of the cam plate (the vertical thickness in Figs. 1 and 2) changes smoothly along the circumferential direction. The cam follower rod 12 is constructed as a rod-shaped member overall, with cam plate contact bearings 12A (Fig. 2: rolling bearings: moving parts) near both end portions. The cam plate contact bearings 12A are rotatably pressed against the surface 11A of the cam plate 11 by the elastic force of the spring 15. Roller bearings, for example, are used for the cam plate contact bearings 12A. Although not shown, the moving parts can be constructed with rollers instead of the cam plate contact bearings 12A. As shown in Fig. 2, long hole contact bearings 12B (Fig. 2) are provided at both end portions of the cam follower rod 12 (the parts radially outward from the cam plate contact bearings 12A). The long hole contact bearings 12B are inserted into long holes 14A (refer to Fig. 8: not shown in Figs. 1 and 2) formed in the cam plate side casing 14, and are movable in the longitudinal direction (vertical direction in Figs. 1 and 2) within the long holes 14A. The structure where the long hole contact bearings 12B are inserted into the long holes 14A will be described later with reference to Fig. 8. Ball bearings, for example, can be used for the long hole contact bearings 12B.

In Fig. 2, the cam follower rod 12 is connected to a base part 13A of the valve stem support 13 extending in the central axis C direction at a position corresponding to a central part of the cam plate 11. The cam follower rod 12 and the valve stem support 13 are connected via a connection part bearing 12C. A roller bearing, for example, can be used for the connection part bearing 12C. Interposing the cam plate contact bearings 12A and the connection part bearing 12C in the cam follower rod 12 allows the cam plate 11 to smoothly rotate even when high pressure from the compressed hydrogen gas is applied. The other end of the valve stem support 13 (the end part away from the cam follower rod 12: the upper end part in Figs. 1 and 2) is connected to the valve stem 1.

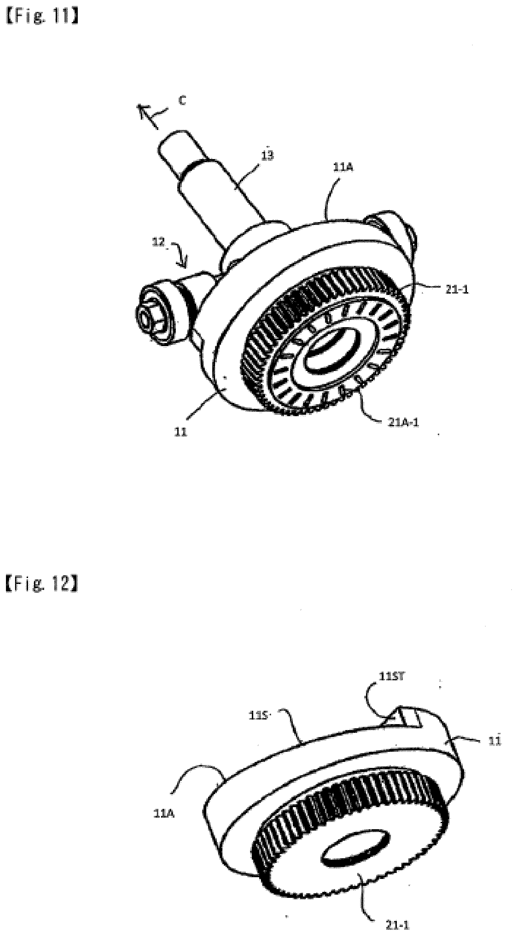

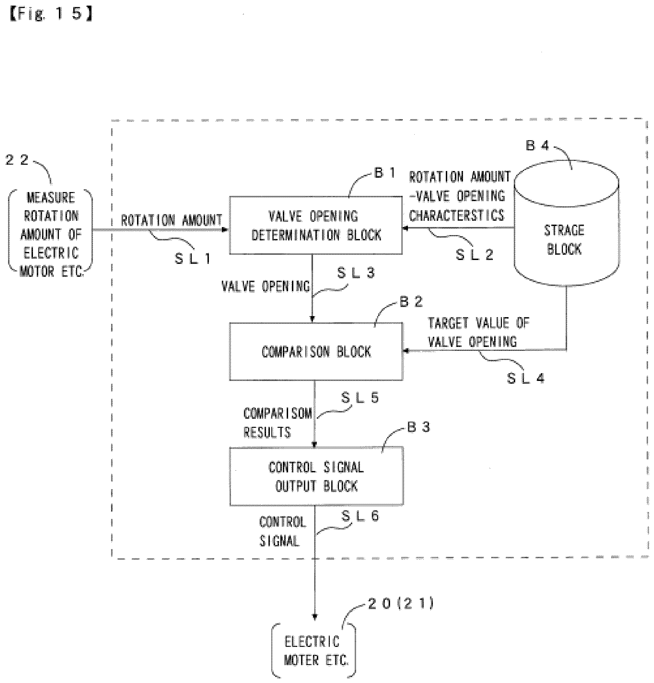

In Figs. 1 and 2, the reduction mechanism 21 is a mechanism that reduces and transmits the rotation speed of the output of the electric motor 20, which is the drive source, but it is not limited to the structure shown and can apply conventionally known structures. However, in the illustrated embodiment, a reduction mechanism with specifications and structure that can withstand operation under conditions where high-pressure hydrogen gas is applied is adopted, such as appropriately adopting thrust bearings. The structure of attaching thrust bearings to the gears of the reduction mechanism 21 will be described later with reference to Fig. 11. A gear 21-1 (Fig. 2) set in the position closest to the cam plate 11 among the gears constituting the reduction mechanism 21 and the cam plate 11 are integrated by fitting a key 17 (Fig. 2) (refer to Figs. 11 and 12). Although not explicitly shown in Figs. 1 and 2, in the illustrated embodiment, a control unit CU (control device: refer to Fig. 15) for controlling the flow rate of the flow rate regulating valve 100 is provided, and there is also a measuring device (22: rotation amount sensor) that measures the rotation amount of the output shaft of the electric motor 20 or the rotation amount of the gear constituting the reduction mechanism (refer to Fig. 15: not shown in Figs. 1 and 2).

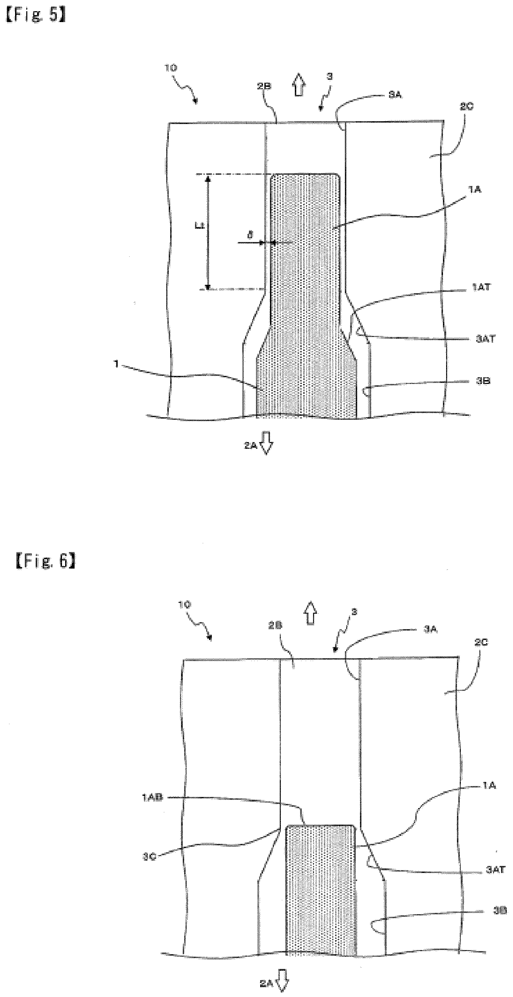

Next, the flow path adjustment part 10 will be explained with reference to Figs. 3 to 7. In Fig. 3, the characteristic of the valve opening and hydrogen flow rate of the flow rate regulating valve is shown by the characteristic line L1 (L11, L12), and the valve opening of the flow rate regulating valve gradually increases (moves to the upper region on the vertical axis in Fig. 3) as it opens (moves to the right direction region on the horizontal axis in Fig. 3) from the closed state (the origin in Fig. 3). Then, it transitions from the low flow rate region R1 where the opening is small to the high flow rate region R2 where the opening has increased. In the low flow rate region R1, since the slope θ1 of the characteristic line L11 is small and the pressure increase is also small, damage to the fuel tank and various piping of the FCV (fuel cell vehicle), which is the filling target, can be minimized. On the other hand, in the high flow rate region R2, since the slope θ2 of the characteristic line L12 is large, it can meet the demand for a large hydrogen flow rate and high-speed hydrogen filling. The operation of the flow rate regulating valve in the low flow rate region R1 will be explained with reference to Figs. 4 to 6, and the operation of the flow rate regulating valve in the high flow rate region R2 will be explained with reference to Fig. 7. In Fig. 3, the symbol L13 indicates the boundary between the low flow rate region R1 and the high flow rate region R2, and the state at the boundary L13 is shown in Fig. 6.

In Fig. 4 showing the details of the flow path adjustment part 10, a flow path 3 is formed in the flow path forming part 2C of the main body 2, and the flow path 3 has a small diameter part 3A communicating with the outlet 2B, a large diameter part 3B communicating with the flow path inlet 2A (refer to Fig. 1), and a tapered part 3AT connecting them. A valve stem tip taper part 1AT is formed on the inlet 2A side (lower side in Fig. 4) of the valve stem tip 1A, and the inlet 2A side of the valve stem tip taper part 1AT is continuous with the valve stem 1 (valve stem body: the part with a larger diameter than the valve stem tip 1A). In the state of Fig. 4, the valve stem tip 1A is inserted into the small diameter part 3A of the flow path, and the valve stem tip taper part 1AT is in contact with the flow path taper part 3AT. In the state of Fig. 4, the valve stem tip 1A constitutes the valve body, the flow path taper part 3AT constitutes the valve seat, and the flow rate regulating valve 30 is closed. In Fig. 4, there exists an annular gap δ with a minute radial dimension between the outer peripheral surface of the valve stem tip 1A and the inner peripheral surface of the small diameter part 3A of the flow path. When the flow rate regulating valve 100 constituted by the valve stem tip taper part 1AT and the flow path taper part 3AT is open, a hydrogen gas flows through the annular gap δ in a small amount. In that case, the hydrogen flow rate depends on the flow path resistance in the annular gap δ, and this flow path resistance is determined by the axial length Lt of the valve stem where the valve stem tip 1A is inserted into the small diameter part 3A of the flow path. The axial length Lt of the valve stem is the distance (axial length of the valve stem) that the hydrogen gas flows through the annular gap δ.

Figure 5 shows the state where the valve stem 1 (valve stem tip 1A) has been moved to the lower side in Fig. 4 from the state in Fig. 4 (where the valve is closed). In Fig. 5, because the valve stem 1 (valve stem tip 1A) has descended compared to the state in Fig. 4, the valve stem tip taper part 1AT is separated from the flow path taper part 3AT and the flow rate regulating valve 100 is open. The axial length Lt of the valve stem where the valve stem tip 1A is inserted into the small diameter part 3A of the flow path is shorter compared to the state in Fig. 4. In the state of Fig. 5, because the axial length Lt of the valve stem is long, the flow path resistance in the annular gap δ is large, and the flow rate of hydrogen gas flowing through the gap δ is small. As the valve stem tip 1 further descends and the axial length Lt of the valve stem becomes shorter, the flow path resistance in the gap δ becomes smaller, and the hydrogen gas flow rate increases. In the flow rate regulating valve 100 according to the illustrated embodiment, the flow rate of hydrogen gas flowing through the annular gap δ can be finely adjusted by varying the axial length Lt of the valve stem where the valve stem tip 1A is inserted into the small diameter part 3A of the flow path, thereby varying the flow path resistance.

In the state shown in Fig. 6, the end face 1AB of the valve stem tip 1A aligns with the boundary 3C between the small diameter part 3A of the flow path and the flow path taper part 3AT, and the axial length Lt of the valve stem (refer to Figs. 4 and 5: not shown in Fig. 6) becomes zero. The state shown in Fig. 6 is the state at the boundary L13 (Fig. 3) between the low flow rate region R1 and the high flow rate region R2 in the illustrated flow rate regulating valve 100. If the valve stem 1 is further lowered from the state shown in Fig. 6, it becomes the state shown in Fig. 7.

In Fig. 7, the end face 1AB of the valve stem tip 1A is positioned below the boundary 3C between the small diameter part 3A and the flow path taper part 3AT. In Fig. 5 showing the state of the low flow rate region, the flow path through which hydrogen gas flows is constituted by the annular gap δ, and the flow path resistance is large. On the other hand, in the state shown in Fig. 7, the flow path through which hydrogen gas flows is constituted by the region between the outer peripheral surface of the valve stem tip 1A and the inner peripheral surface of the flow path taper part 3AT, and its cross-sectional area is far larger compared to the annular gap δ shown in Fig. 5, the flow path resistance is small, and the flow rate of hydrogen gas is large (high flow rate region). If the valve stem 1 (valve stem tip 1A) descends further, the cross-sectional area of the flow path for hydrogen gas increases dramatically. According to the illustrated flow rate regulating valve 100, the transition from the valve closed state → low flow rate state → high flow rate state is all performed continuously by an operation to move the valve stem tip 1A in the direction of removing it from the small diameter part 3A of the flow path. By a continuous and smooth operation, immediately after closing, that is, at the time of valve opening, hydrogen gas flows at a small flow rate, the small flow rate gradually increases (low flow rate region R1), and after the state shown in Fig. 6 (L13 in Fig. 3), the hydrogen gas flow rate rapidly increases (high flow rate region R2). Here, the configuration of the flow path adjustment part A shown in Figs. 3 to 7 is just an example. The flow path adjustment part A in the illustrated embodiment can also be configured similarly to the flow rate regulating valve shown in, for example, Patent Document 1.

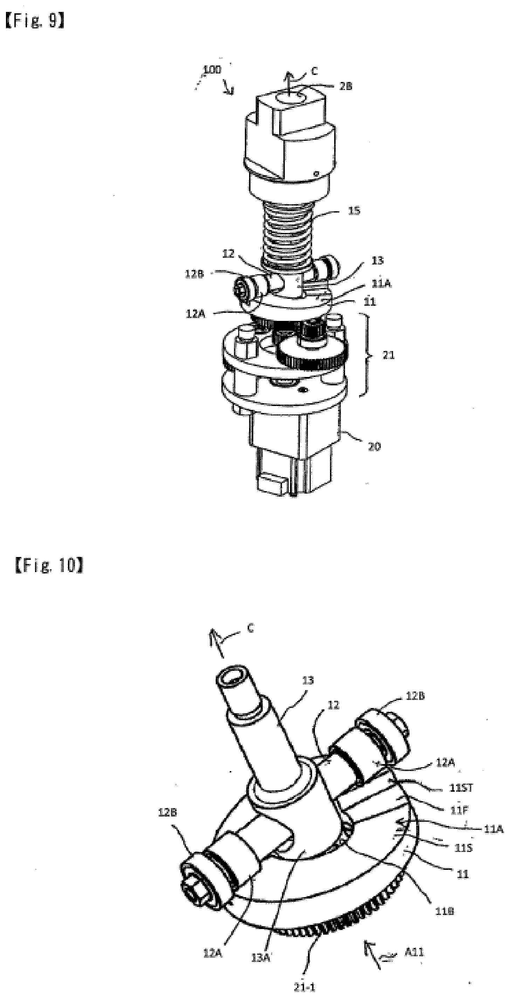

The flow rate regulating valve 100 shown in cross-section in Figs. 1 and 2 is shown in a perspective view in Fig. 8. Figure 9 shows the state with the cam plate side casing 14 omitted from Fig. 8. In Fig. 8, long holes 14A are formed on both side surfaces of the cam plate side casing 14, and long hole contact bearings 12B are inserted into the long holes 14A, and the long hole contact bearings 12B are placed at the ends of the cam follower rod 12 (refer to Fig. 9. However, in Fig. 9, the cam plate side casing 14 is omitted). With such a configuration, when the cam plate 11 (Fig. 9) rotates by the rotation of the electric motor 20 (drive source) transmitted through the reduction mechanism 21, it prevents the situation where the valve stem support 13 (Fig. 9) and the valve stem 1 (Figs. 1 and 2) rotate (co-rotate) around their central axis and do not move in the central axis direction (arrow C direction in Figs. 8 and 9). In Figs. 8 and 9, the symbol 2B indicates the outlet for high-pressure hydrogen gas.

As shown in Figs. 1, 2, and 9, the valve stem support 13 is connected (via the connection part bearing 12C) so as to surround the cam follower rod 12, and the valve stem support 13 and the cam follower rod 12 are pressed towards the cam plate 11 by the spring 15. When the cam plate 11 rotates driven by the electric motor 20 through the reduction mechanism 21, due to the slope on the upper surface 11A of the cam plate 11, the valve stem support 13 and the cam follower rod 12 move in the central axis C direction of the valve stem 1.

In Figs. 9 and 10, the cam contact bearings 12A and the long hole contact bearings 12B are provided at both ends of the cam follower rod 12, respectively, and the cam follower rod 12 is pressed against the surface 11A of the cam plate 11 via the cam contact bearings 12A. A slope is formed on the surface 11A of the cam plate 11, and this slope is formed as two slopes that are point-symmetric with respect to the center of the central opening 11B (Figs. 10 and 13) of the cam plate 11. The reason for forming two point-symmetric slopes is that each slope presses the two cam contact bearings 12A placed near both ends of the cam follower rod 12 with the same pressure. In Fig. 10, the symbol 11F indicates a flat surface constituting part of the cam plate surface 11A, and the symbol 11ST indicates a step part on the cam plate surface 11A. The surface 11A of the cam plate 11 will be described later with reference to Fig. 13.

In Figs. 9 and 10, when the electric motor 20 (refer to Figs. 1 and 2) rotates, its rotation is transmitted to the cam plate 11 through the reduction mechanism 21, and the cam plate 11 rotates. As shown in Figs. 10 and 11, the gear 21-1, which is the gear closest to the cam plate 11 among the gears constituting the reduction mechanism 21, is integrated with the cam plate 11. When the cam plate 11 rotates, due to the slope (two slopes placed point-symmetrically) of the cam plate surface 11A, the position in the central axis C direction of the cam plate surface 11A where the two cam plate contact bearings 12A near both ends of the cam follower rod 12 are in contact changes, thereby, the cam follower rod 12 moves in the central axis C direction. If the cam follower rod 12 moves in the central axis C direction, the valve stem 1 (Figs. 1 and 2) moves through the valve stem support 13 (base part 13A) connected to the cam follower rod 12, and the valve opening of the flow rate regulating valve 100 can be adjusted. In other words, by controlling the rotation angle of the cam plate 11, the position of the cam follower rod 12 in the central axis C direction can be adjusted, and the valve opening of the flow rate regulating valve 100 is controlled.

In the illustrated embodiment, it is possible to adjust the valve opening by reciprocating the valve body 1AT (Figs. 4-7) in the axial direction of the valve stem 1 by converting rotational motion to linear motion using the cam plate 11 and the follower rod 12, with a rotary device such as the electric motor 20 as a power source. If the electric motor 20 is used as a drive source, it is possible to directly control the valve opening by controlling the electric motor 20. According to the illustrated embodiment, since the rotational motion is not converted to linear motion by a screw mechanism, the pressure of the high-pressure hydrogen gas acting as the working fluid does not act on the screw threads of a screw mechanism, and wear or damage to the screw engagement portion does not occur, which improves the durability of the flow rate regulating valve. Furthermore, appropriately placing bearings or rollers in the follower rod 12, the valve stem support 13, and the reduction mechanism 21 to reduce resistance allows the cam plate 11 to rotate and the position of the valve stem 1 in the central axis C direction to be adjusted without using large power, resulting in no need for large actuators or air valves as in the conventional technology. By measuring the rotation amount of the electric motor 20, which is the drive source, or the rotation amount at a certain point in the reduction mechanism 21, it is possible to identify the position of the cam plate surface 11A and the cam follower 12, and by controlling the rotation amount of the electric motor 20 or the rotation amount at a certain point in the reduction mechanism 21, it is possible to accurately control the position of the valve stem 1 in the central axis C direction, thereby, the flow rate of high-pressure gas can be accurately controlled according to the required characteristics.

In Fig. 11 showing the back surface (the opposite surface to the cam plate surface 11A) of the cam plate 11, as mentioned above, the gear 21-1, which is the gear closest to the cam plate 11 among the gears of the reduction mechanism 21, and the cam plate 11 are coupled by fitting a key 17 (not shown: refer to Fig. 2). On the surface opposite to the cam plate 11 of the gear 21-1 (the lower surface in Fig. 11), thrust roller bearings 21A-1 are provided. By providing the thrust roller bearings 21A-1 on the surface of the gear 21-1 opposite to the cam plate 11, it can withstand the compressive force applied by the high-pressure hydrogen gas. Figure 12 shows the state where the cam plate 11 and the gear 21-1 are integrated, and a sloped surface 11S and a step part 11ST are formed on the cam plate surface 11A. The sloped surface 11S and the step part 11ST will be described later with reference to Fig. 13. Note that in Fig. 12, the illustration of the thrust roller bearings 21A-1 (refer to Fig. 11) provided on the gear 21-1 is omitted.

A slope corresponding to the movement amount (displacement amount) of the valve stem 1 (valve body 1AT, Figs. 4-7) is formed on the surface 11A (cam plate surface: the upper surface in the illustrated example) of the cam plate 11. In Fig. 13, in addition to the sloped surfaces 11S (11S-1, 11S-2), flat surfaces 11F (11F-11, 11F-12, 11F-21, 11F-22) are formed on the surface 11A of the cam plate 11. Two sloped surfaces 11S-1, 11S-2 extending in the circumferential direction are formed point-symmetrically with respect to the center of the central opening 11B of the cam plate 11. Flat surfaces 11F-11, 11F-12 are formed adjacent to both circumferential ends of the sloped surface 11S-1, and flat surfaces 11F-21, 11F-22 are formed adjacent to both circumferential ends of the sloped surface 11S-2. These flat surfaces are also point-symmetric with respect to the center of the central opening 11B of the cam plate 11, have the same shape, and extend in the circumferential direction. The two sloped surfaces 11S-1, 11S-2 each press the two cam plate contact bearings 12A (refer to Figs. 2, 9, 10) placed near both ends of the follower rod 12 with the same pressure.

In Fig. 13, the flat surfaces 11F are provided to prevent the valve opening to be adjusted from deviating from a predetermined range when the rotation amount of the electric motor 20 is too large and the cam plate 11 rotates too much. In other words, because of the flat surfaces 11F, even if the electric motor 20 and the cam plate 11 rotate too much, the valve stem 1 does not displace excessively, preventing the valve opening from becoming too large or too small, and ensuring that the opening and closing of the flow rate regulating valve 100 are performed within a predetermined range. This can prevent damage to the valve seat 3AT and the valve stem 1. As shown in Fig. 13, the circumferential distance of the flat surfaces 11F is shorter compared to the sloped surfaces 115. Each of the sloped surfaces 11S-1, 11S-2 gradually protrudes (in the SU arrow direction in Fig. 13) from the same height as the respective flat surfaces 11F-11, 11F-21 as it progresses in the circumferential direction (in the CL arrow direction) with respect to the movement direction of the valve stem 1 (in the SU arrow direction). After passing the position where the sloped surfaces 11S-1, 11S-2 protrude most in the SU arrow direction, they reach the flat surfaces 11F-12, 11F-22. Step parts 11ST are formed at the boundary between the flat surface 11F-12 and the flat surface 11F-21, and at the boundary between the flat surface 11F-22 and the flat surface 11F-11. In Fig. 13, the height of the step in the SU arrow direction is indicated by the symbol H. The height dimension H of the step part 11ST (in the SU arrow direction) is equal to the movement distance of the central axis of the valve stem during rapid release of the valve of the valve stem tip 1A in Fig. 4, or the distance from the position of the valve stem tip 1A in Fig. 4 (valve closed position of the flow rate regulating valve 100) to the position of the valve stem tip 1A in Fig. 7 (high flow rate region of the flow rate regulating valve 100).

The manner of valve opening and closing control of the flow rate regulating valve 100 by rotation of the cam plate 11 will be explained for the case of normal valve opening and closing and the case of rapid valve opening. In the case of normal valve opening and closing, the cam plate contact bearings 12A (refer to Figs. 2, 9, 10) near both ends of the cam follower rod 12 each rotate around the center of the central opening 11B of the cam plate 11 while in contact with the sloped surfaces 11S-1, 11S-2 of the cam plate 11 (hereinafter, the two sloped surfaces are collectively expressed as sloped surfaces 11S). At that time, the axial position of the valve stem 1 is determined according to the amount of protrusion of the sloped surface 11S on the valve stem 1 side (the amount of protrusion on the SU arrow side in Fig. 13) at the contact position between the cam plate contact bearings 12A and the sloped surface 115, and the valve opening of the flow rate regulating valve 100 is adjusted. For example, if the "protrusion amount" increases when the contact position advances in the CL arrow direction, etc., the valve stem 1 moves in the direction to close the flow rate regulating valve 100. If the "protrusion amount" decreases when the contact position advances in the opposite direction of the CL arrow, etc., the valve stem 1 moves in the direction to open the flow rate regulating valve 100. When the contact position advances in the CL arrow direction and the "protrusion amount" increases, reaching a position adjacent to the flat surface 11F-12 or 11F-22 (a position on the sloped surface 11S), the flow rate regulating valve 100 is closed. Also, when the contact position advances in the opposite direction of the CL arrow and the "protrusion amount" decreases, reaching a position adjacent to the flat surface 11F-11 or 11F-21 (a position on the sloped surface 11S), the flow rate regulating valve 100 is opened.

If the cam plate 11 is rotated and the contact position between the cam plate contact bearings 12A and the sloped surface 11S moves further in the CL arrow direction beyond the aforementioned closed position, passing over the step part 11ST to move to the other flat surface 11F-11 or 11F-21, the valve stem 1 moves in the direction to open the flow rate regulating valve 100. This allows the flow rate regulating valve 100 to be instantly fully opened from the closed state.

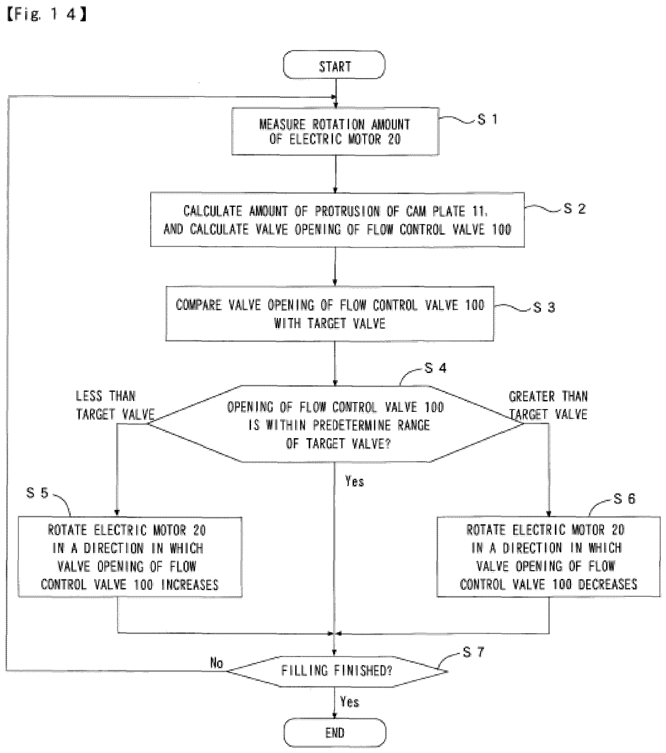

The opening and closing control of the flow rate regulating valve 100 described above will be explained mainly with reference to Fig. 14. In the flowchart of Fig. 14, in Step S1, the rotation amount of the electric motor 20 (Figs. 1 and 2) is measured by the rotation amount measuring device 22 (refer to Fig. 15). When measuring this rotation amount, instead of measuring the electric motor 20, the rotation amount of any of the gears of the reduction mechanism 21 (Figs. 1 and 2) may be measured. In Step S2, based on the detected rotation amount of the electric motor 20 etc. measured in Step S1, the valve opening of the flow rate regulating valve 100 is calculated and determined. When calculating the valve opening of the flow rate regulating valve 100, the movement amount of the valve stem 1 in the central axis C direction is calculated based on the rotation amount of the electric motor 20 etc., and the valve opening of the flow rate regulating valve 100 is calculated. Here, various parameters may be determined by calculation, but it is also possible to specify formulas or charts showing their relationships in advance and determine the necessary parameters by referring to these formulas or charts.

In the subsequent Step S3, the valve opening of the flow rate regulating valve 100 calculated and determined in Step S2 is compared with the target value (valve opening in Fig. 3). This target value for the valve opening is, for example, a target value with elapsed time as a parameter, as shown in the characteristics in Fig. 3, but it may be determined by parameters other than elapsed time. In Step S4, based on the comparison result of Step S3, it is judged whether the valve opening of the flow rate regulating valve 100 determined in Step S2 is within a predetermined range of the target value. As a result of the judgment in Step S4, if the valve opening of the flow rate regulating valve 100 is smaller than the predetermined range of the target value, the process proceeds to Step S5, and if the valve opening is larger than the predetermined range of the target value, the process proceeds to Step S6. If the valve opening of the flow rate regulating valve 100 is within the predetermined range of the target value (Step S4 is "Yes"), the process proceeds to Step S7 without rotating the electric motor 20.

In Fig. 14, in Step S5 (when the valve opening is smaller than the predetermined range of the target value), the electric motor 20 is rotated by a predetermined small rotation amount in the direction to increase the valve opening of the flow rate regulating valve 100. In Step S6 (when the valve opening is larger than the predetermined range of the target value), the electric motor 20 is rotated by a predetermined small rotation amount in the direction to decrease the valve opening of the flow rate regulating valve 100. In Step S7, it is judged whether the filling using the system including the flow rate regulating valve 100 has ended. In Step S7, if it is judged as "Filling ended" (Step S7 is "Yes"), the control is ended, and if it is not "Filling ended" (Step S7 is "No"), the process returns to Step S1 (loop when Step S7 is "No"). Although not shown in Fig. 14, in the case of rapid valve opening, it is judged whether the flow rate regulating valve 100 is in a closed state, it is judged whether rapid opening should be performed, and if rapid opening should be performed, control is performed to rotate the electric motor 20 so that the contact position of the cam contact bearings 12A and the sloped surface 11S moves from the flat surfaces 11F-12, 11F-22 over the step part 11ST to the flat surfaces 11F-21, 11F-11.

The control unit CU (control device) that performs the opening and closing control of the flow rate regulating valve 100 described above will be explained with reference to Fig. 15. In Fig. 15, the control unit CU has a valve opening determination block B1, a comparison block B2, a control signal output block B3, and a memory block B4. The valve opening determination block B1 acquires the detection value of the rotation amount from the electric motor rotation amount detection sensor (measuring device) 22 that measures the rotation amount of the electric motor 20, via the signal transmission line SL1. The valve opening determination block B1 acquires the "characteristic of electric motor 20 rotation amount - flow rate regulating valve 100 valve opening" stored in the memory block B4, via the signal transmission line SL2. The relationship between the rotation amount of the electric motor 20, the protrusion amount in the central axis direction of the contact position between the cam plate sloped surface 11S and the cam follower rod 12 (the movement amount of the valve stem 1 and valve stem tip 1A in the central axis direction), and the valve opening of the flow rate regulating valve can be determined in advance. Using this predetermined relationship, the valve opening of the flow rate regulating valve can be calculated from the rotation amount of the electric motor 20 etc.

The valve opening determination block B1 has the function of calculating and determining the valve opening of the flow rate regulating valve 100 by referring to the "characteristic of electric motor 20 rotation amount - flow rate regulating valve 100 valve opening" based on the detected value of the rotation amount of the electric motor 20 acquired. The "valve opening of the flow rate regulating valve 100" determined in the valve opening determination block B1 is sent to the comparison block B2 via the signal transmission line SL3.

The comparison block B2 acquires the target value of the valve opening of the flow rate regulating valve 100 (for example, a target value with elapsed time as a parameter) from the memory block B4 via the signal transmission line SL4. The comparison block B2 has the function of comparing the valve opening of the flow rate regulating valve 100 determined in the valve opening determination block B1 with the aforementioned target value of the valve opening. The comparison result of the comparison block B2 is sent to the control signal output block B3 via the signal transmission line SL5.

Based on the comparison result by the comparison block B2, the control signal output block B3 has the function of outputting a control signal to the electric motor 20 (or the reduction mechanism 21) via the signal transmission line SL6 so that the valve opening of the flow rate regulating valve 100 becomes the target value (or a value within a predetermined range from the target value). This control signal is, as explained in Steps S5 and S6 of Fig. 14, "a control signal to rotate the electric motor 20 in the direction to increase the valve opening of the flow rate regulating valve 100" or "a control signal to rotate the electric motor 20 in the direction to decrease the valve opening of the flow rate regulating valve 100". The memory block B4 has the function of acquiring and storing information and data necessary for the opening and closing control of the flow rate regulating valve 100 in advance, and providing them to each functional block as needed. The information and data stored in the memory block B4 are, for example, specification data related to the components constituting the flow rate regulating valve 100 (the valve stem 1, main body 2, flow path 3, cam plate 11, sloped surface 11S of the cam plate 11, cam follower rod 12, electric motor 20, reduction mechanism 21), the characteristic of electric motor 20 rotation amount - flow rate regulating valve 100 valve opening, the target value of the valve opening of the flow rate regulating valve 100, etc.

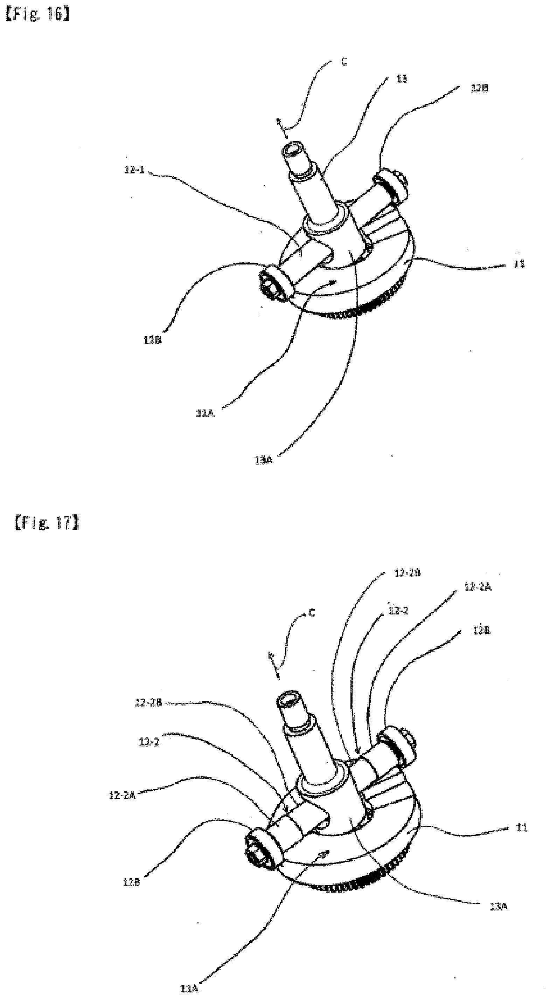

Figure 16 shows the main part of the flow rate regulating valve according to the first modification of the illustrated embodiment. In the embodiment explained in Figs. 1 to 15, for example, as shown in Fig. 10, the cam plate contact bearings 12A and the long hole contact bearings 12B are provided at both ends of the cam follower rod 12 that is arranged to pass through the valve stem support 13, respectively, and the cam plate contact bearings 12A roll on the surface 11A of the cam plate 11. The cam plate contact bearings 12A constitute rolling bearings. In contrast, in the first modification shown in Fig. 16, long hole contact bearings 12B are provided at both ends of the cam follower rod 12-1 that passes through the valve stem support 13, but no cam plate contact bearings or rolling bearings are provided. In Fig. 16, the area of the cam follower rod 12-1 radially inward from the long hole contact bearings 12B is in contact with the surface 11A of the cam plate 11 and slides on the surface 11A. When the cam plate 11 rotates, the position in the central axis C direction of the cam plate surface 11A that the cam follower rod 12-1 is in contact with changes, thereby, the cam follower rod 12-1 moves in the central axis C direction, the valve stem 1 (Figs. 1 and 2) moves, and the valve opening of the flow rate regulating valve 100 can be adjusted. The other configurations and effects of the first modification in Fig. 16 are the same as those of the embodiment in Figs. 1 to 15.

In the first modification of Fig. 16, the cam follower rod 12-1 is a cylindrical member with a constant radius, and it is in contact with the area from the inner diameter to the outer diameter of the cam plate 11. Due to the difference in radial dimension from the rotation axis (central axis C) at the contact point, the area where the cam follower rod 12-1 contacts the cam plate surface 11A becomes larger near the outer diameter of the cam plate 11 compared to near the inner diameter at the same rotation speed. Therefore, the amount of wear of the cam follower rod 12-1 and/or the cam plate surface 11A increases near the outer diameter of the cam plate 11. The second modification in Fig. 17 has a relatively large diameter region 12-2A and a relatively small diameter region 12-2B in the area radially inward from the bearings 12B of the cam follower rod 12-2, and a step is formed at the boundary between the large diameter region 12-2A and the small diameter region 12-2B. With such a configuration, only the large diameter region 12-2A slides on the cam plate surface 11A, thereby, by appropriately setting the axial length of the large diameter region 12-2A, the size of the part where the cam follower rod 12-2 contacts the cam plate surface 11A can be adjusted. This can reduce the difference in wear amount due to the difference in radial dimension from the central axis C mentioned above. This large diameter region 12-2A may be constituted by a sliding bearing. The other configurations and effects of the second modification in Fig. 17 are the same as those of the first modification in Fig. 16.

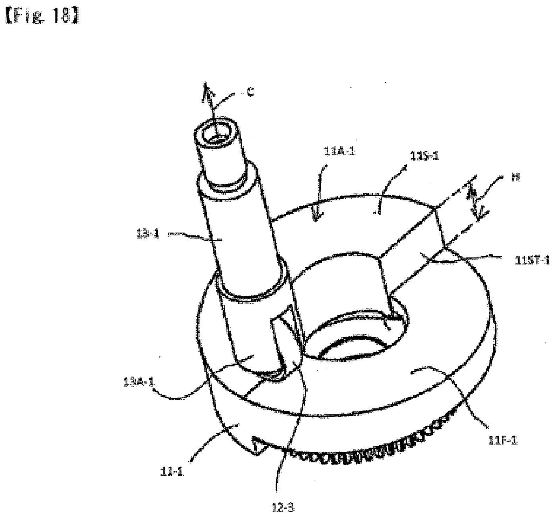

Figure 18 shows of the flow rate regulating valve according to the third modification of the illustrated embodiment. In the embodiment of Figs. 1 to 15, two cam contact bearings 12A are in contact with the surface 11A of the cam plate 11, and the cam contact bearings 12A are each provided near both ends of the cam follower rod 12 extending in the diameter direction of the cam plate 11. The cam follower rod 12 is connected to one end of the valve stem support 13. The valve stem support 13 extends in the central axis C direction (arrow C direction) at the center of the cam plate 11. In contrast, in the third modification of Fig. 18, the valve stem support 13-1 extends in the central axis direction (arrow C direction) at a position eccentrically offset radially outward from the center of the cam plate 11-1. Instead of the cam follower rod, a rotatably supported cam follower roller 12-3 (cam follower) is provided at the cam plate side end of the valve stem support 13-1, and it moves on the cam plate surface 11A-1. The cam follower roller 12-3 is constructed as a thin disc-shaped member and constitutes a rolling bearing.

As shown in Fig. 18, about one-half of the cam plate surface 11A-1 is a flat surface 11F-1, and the remaining about one-half is a sloped surface 11S-1, and a step part 11ST-1 with a height H is formed at the boundary between the position where the sloped surface 11S-1 protrudes most in the central axis direction (arrow C direction) and the flat surface 11F-1. The shape of the cam plate surface 11A-1 is not point-symmetric with respect to the center of the cam plate 11-1 as in Figs. 10 and 13 because the part in contact with the cam plate surface 11A-1 is a single cam follower roller 12-3. In Fig. 18, the rotation axis (not shown) of the cam follower roller 12-3 is supported by each branch of the base part 13A-1 of the valve stem support 13-1 that splits into two.

According to the third modification of Fig. 18, when the cam plate 11-1 rotates, the valve stem support 13 moves up and down, so that the situation where the valve stem 1 only rotates around its axis without moving in the axial direction (arrow C direction) (so-called "co-rotation") does not occur. Therefore, it is possible not to provide a co-rotation prevention mechanism (the mechanism where the long hole contact bearings 12B at the ends of the cam follower rod 12 are inserted into the long holes 14A of the cam plate side casing 14: refer to Fig. 8) as in the embodiment of Figs. 1 to 15. However, it is possible to provide a pin (not shown in Fig. 18) extending radially outward on the valve stem support 13-1, and insert that pin into a long hole (not shown in Fig. 18) of the housing covering the outside of the valve stem support 13-1, so that the valve body 1AT and the valve seat 3AT (refer to Fig. 4) do not rotate and contact at the same position each time.

In Fig. 18 as well, as in the modifications shown in Figs. 16 and 17, instead of the cam follower roller 12-3, it is possible to provide a member (for example, a hemispherical member) that smoothly slides on the cam plate surface 11A, and this sliding member constitutes a sliding bearing. Fig. 18 only shows the cam plate 11-1, the valve stem support 13-1, and the cam follower roller 12-3, but other configurations and effects are the same as those explained in Figs. 1 to 17.

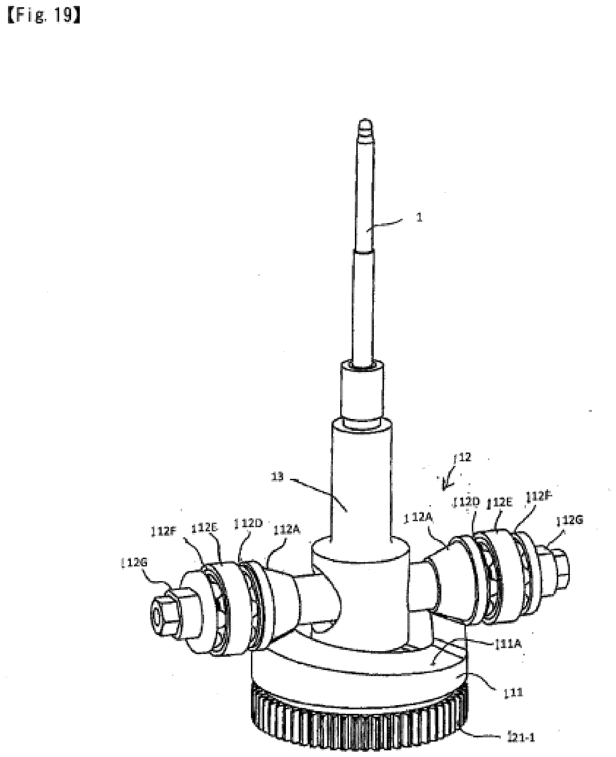

Next, the fourth modification of the illustrated embodiment will be described with reference to Figs. 19 to 23. In the following description, the same components as those in the above-mentioned flow rate regulating valves are given the same reference numbers and will not be described again.

In Fig. 19, which shows a cam plate 111, cam follower rod 112, cam follower roller 112A, and valve stem support 13 assembled together, the upper end side of the valve stem support 13 is connected to the shaft 1 (valve rod). The lower end side of the valve stem support 13 is connected to the cam follower rod 112 (cam follower). The portion of the cam follower roller 112A that abuts against a cam plate surface 111A (upper surface) is formed into a truncated cone shape. In the cam follower rod 112, a first thrust bearing 112D, thrust bearing housing member 112E, second thrust bearing 112F, and fastening member 112G are provided radially outward of the cam follower roller 112A. The second thrust bearing 112F and the thrust bearing housing member 112E constitute the long hole contact bearing 12B.

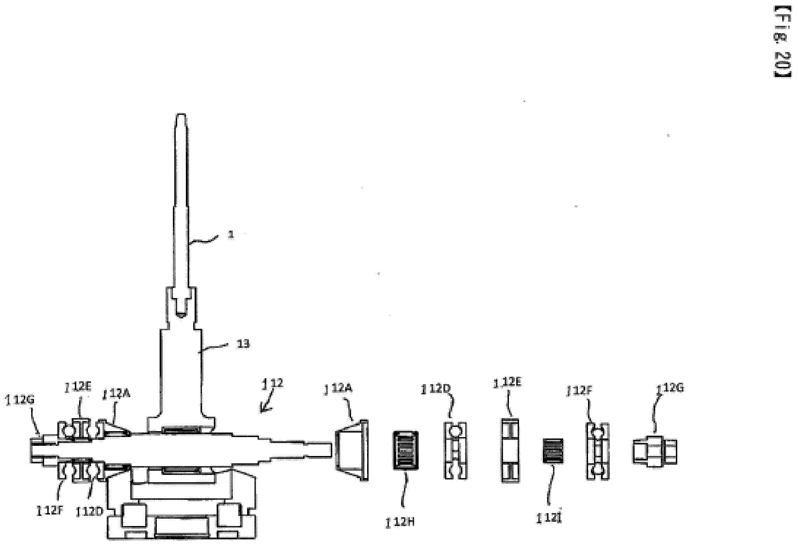

As shown in Fig. 20, which is an exploded cross-sectional view of the mounting structure of the cam follower roller 112A, a bearing 112H that receives a radial load is disposed inside the cam follower roller 112A. A bearing 112I that receives a radial load is disposed inside the thrust bearing housing member 112E. The first thrust bearing 112D is interposed radially inward (in the axial direction of the cam follower rod 112, on the left side in Fig. 20) of the thrust bearing housing member 112E, and the second thrust bearing 112F is interposed radially outward (in the axial direction of the cam follower rod 112, on the right side in Fig. 20).

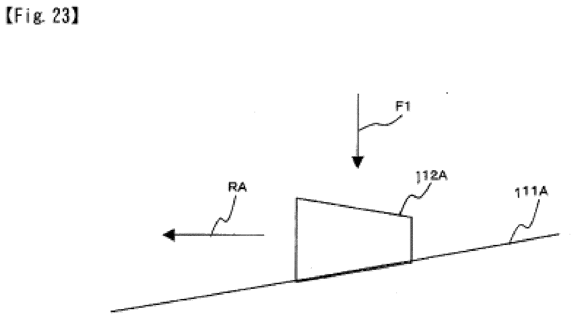

As will be described later with reference to Fig. 23, a force indicated by the symbol RA always acts radially outward on the truncated cone member of the cam follower roller 112A. However, the first thrust bearing 112D supports the radially outward force RA, preventing the cam follower roller 112A from deviating (moving) radially outward. In addition, the first thrust bearing 112D has the function of absorbing the rotation difference between the rotatable cam follower roller 112A and the non-rotating thrust bearing housing member 112E. The two cam follower rollers 112A arranged on the cam follower rod 112 rotate in opposite directions, causing the rod 112 to twist. The second thrust bearing 112F absorbs the twist of the rod 112 and prevents the fastening member 112G from loosening due to the twist.

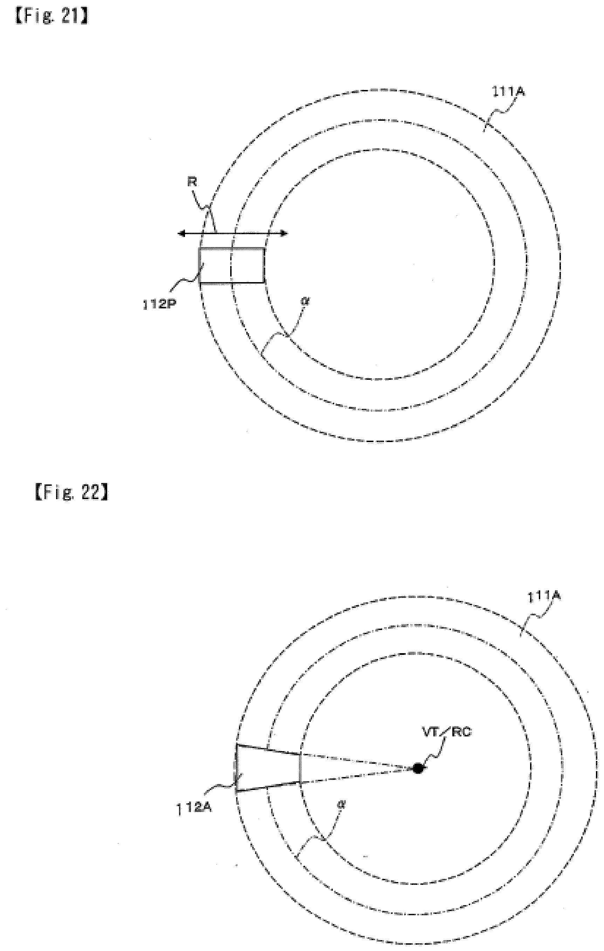

Different from the illustrated modifications, a problem of the cam follower roller 112A being cylindrical in shape will be described with reference to Fig. 21. When the cam plate 111 rotates, a cylindrical member 112P as the cam follower roller rolls on a circular trajectory such as trajectory α along the cam plate surface 111A. At this time, the distance that the cam follower roller moves on the cam plate surface 111A varies depending on the distance to the rotation center point of the cam plate 111. On the other hand, the moving distance when the cylindrical member 112P rotates once is constant, so the cylindrical member 112P slips at any point of the dimension R. To solve this, it is necessary to make the ratio between the travel distance of the cam follower rod 112 and the travel distance of the cam follower roller 112A when it rotates once equal regardless of the distance to the center of rotation of the cam plate 111.

In contrast, in the illustrated modification, a truncated cone-shaped member is used as the cam follower roller 112A. When the virtual apex VT of the truncated cone-shaped member 112A (the apex of the cone imagined when the roller 112A is assumed to be conical) coincides with the center of rotation RC of the cam plate 111, and when the intersection of the extensions of the ridges on both sides of the truncated cone coincides with the center of rotation RC of the cam plate 111, the ratio between the travel distance of the cam follower rod 112 and the travel distance of the cam follower roller 112A when it rotates once becomes equal, and slippage is prevented. In the illustrated modified example, the virtual apex VT of the truncated cone-shaped roller 112A coincides with the center of rotation RC of the cam plate 111.

Here, in Fig. 23, which shows a side view of the truncated cone member 112A on the cam plate surface 111A, a downward pressing force F1 due to the high pressure of the working gas always acts on the truncated cone member 112A, which is a cam driven roller, so a radially outward force RA always acts on the truncated cone member 112A. The first thrust bearing 112D shown in Figs. 19 and 20 is provided to support the radially outward force RA acting on the truncated cone member 112A.

It should be noted that the illustrated embodiments are merely examples and are not intended to limit technical scope of the present invention.

### DESCRIPTION OF THE REFERENCE NUMERALS

1 valve stem
1A valve stem tip
2 main body
3 flow path
3A small diameter part of flow path
3B large diameter part of flow path
11, 111 cam plates
11A, 111A cam plate surfaces
12, 12-1, 12-3, 112 cam followers (cam follower rods or cam follower rollers)
12A, 12A-1, 112A moving parts (rollers or bearings)
13 valve stem support part
20 electric motor (drive source)
21 reduction mechanism
22 measuring device
100 flow rate regulating valve
CU control unit (control device)
Lt dimension where the valve stem (the small diameter part of the valve stem) is inserted into the small diameter part of the flow path
δ gap

## Claims

1. A flow rate regulating valve comprising:
a cam plate;
a cam follower that is pressed against a surface of the cam plate and moves in a direction of a rotation axis of the cam plate as the cam plate rotates; and
a valve stem that moves in the direction of the rotation axis of the cam plate in association with movement of the cam follower, and varies a flow rate depending on a relative position with respect to a flow path.

2. The flow rate regulating valve as claimed in claim 1, wherein the valve stem is connected to one end of a valve stem support portion, the other end of which is connected to the cam follower.

3. The flow rate regulating valve as claimed in claim 1, wherein the cam follower has a moving portion at one end, the moving portion being pressed against a surface of the cam plate.

4. The flow rate regulating valve as claimed in claim 1 or 2, wherein the cam follower is a cam follower rod that is configured as a rod shape overall, has moving parts near both ends that are rotatably pressed against the surface of the cam plate, and one end of the cam follower rod is connected a valve stem support part extending in the direction of the rotation axis at a central part of the cam plate.

5. The flow rate regulating valve as claimed in claim 3, wherein the moving part is a rolling bearing.

6. The flow rate regulating valve as claimed in claim 3, wherein the moving part is a plain bearing.

7. The flow rate regulating valve as claimed in claim 4, wherein the moving part is a rolling bearing.

8. The flow rate regulating valve as claimed in claim 4, wherein the moving part is a plain bearing.

9. The flow rate regulating valve as claimed in claim 1, wherein the cam follower is constituted by a rotatable disk-shaped member, and a rotation axis of the disk-shaped member is supported by one end of a valve stem support portion extending in the direction of the rotation axis of the cam plate from a position eccentric radially outward with respect to the center of the cam plate.

10. The flow rate regulating valve as claimed in claim 3, wherein a thickness of the cam plate is small on a radially outward side and large on a radially inward side, an inclination on the surface of the cam plate on which the cam follower rolls is formed, the moving part of the cam follower is a truncated cone shape, and the inclined surface of the cam plate is complementary to the moving part.

11. The flow rate regulating valve as claimed in claim 10, wherein the moving portion of the cam follower is set such that a point where extensions of ridge lines of the moving portion intersects with a rotation center of the cam plate.

12. The flow rate regulating valve as claimed in claim 1, 2, 9 or 10 further comprising;
a measuring device that measures the number of rotations of an output shaft of a drive source for driving the cam plate or the number of rotations of a gear constituting a reduction mechanism interposed between the drive source and the cam plate; and
a control device that controls a flow rate of the fluid flowing through the flow path based on a measurement result of the measuring device.
